# EUROPÄISCHE PATENTSCHRIFT

(11) **EP 0 970 475 B1**
(45) Veröffentlichungstag und Bekanntmachung des Hinweises auf die Patenterteilung: **26.06.2002**
(21) Anmeldenummer: 98928054.0
(22) Anmeldetag: 23.03.1998
(51) Int. Cl.: G11B 33/00

(54) **HALTEVORRICHTUNG FÜR COMPUTER-SPEICHERLAUFWERKE**
HOLDING DEVICE FOR COMPUTER DRIVES
DISPOSITIF DE MAINTIEN DESTINE A DES UNITES DE DISQUETTES

(30) Priorität: 26.03.1997 DE 29705507 U
(43) Veröffentlichungstag der Anmeldung: 12.01.2000
(73) Patentinhaber: Fujitsu Siemens Computers GmbH, 81739 München (DE)
(72) Erfinder: KÖHLER, Friedrich, D-86405 Meitingen (DE); LORENZ, Pia, D-86510 Ried (DE)
(74) Vertreter: Epping, Wilhelm, Dipl.-Ing.
(86) Internationale Anmeldenummer: DE9800848
(87) Internationale Veröffentlichungsnummer: WO9843246

(56) Entgegenhaltungen:
- DE-A- 4 035 124
- GB-A- 2 190 793
- PATENT ABSTRACTS OF JAPAN vol. 013, no. 570 (P-977), 18.Dezember 1989 & JP 01 237986 A (TOKICO LTD), 22.September 1989,
- ANONYMOUS: "Direct Access Storage Device Adapter Tray to Fit a 3.5-Inch DASD." IBM TECHNICAL DISCLOSURE BULLETIN, Bd. 33, Nr. 12, Mai 1991, NEW YORK, US, Seiten 486-489, XP002076927

## Beschreibung

Die Erfindung betrifft eine Haltevorrichtung für Computer-Speicherlaufwerke nach den Merkmalen des Oberbegriffs des Anspruchs 1.

Für die Befestigung von Speicherlaufwerken in Computer-Gehäusen werden vielfach käfigartige Chassis verwendet, die üblicherweise mehrere übereinander angeordnete Einbauplätze aufweisen. In jeden dieser Einbauplätze ist jeweils ein Speicherlaufwerksträger einschiebbar, der am Chassis mittels mehrerer Schrauben, die in an den Seitenwänden der Laufwerksträger vorgesehene Gewindebohrungen eingreifen, festschraubbar ist. Durch das beidseitige Festschrauben am Gehäuse ist zwar einerseits sichergestellt, dass der Laufwerksträger spielfrei und in weitgehend exakter Ausrichtung im Chassis angeordnet ist, andererseits erfordert die Mehrfachverschraubung einen erheblichen Montageaufwand beim Ein- und Ausbau, insbesondere auch deshalb, weil eine der beiden Chassisseiten, bedingt durch den üblicherweise sehr dicht gedrängten Aufbau, vielfach nicht sehr gut zugänglich ist.

Der vorliegenden Erfindung liegt deshalb die Aufgabe zugrunde, für die Befestigung von Speicherlaufwerksträgern in einem innerhalb eines Rechnergehäuses angeordneten käfigartigen Chassis ein möglichst einfache, montagefreundliche Lösung zu finden.

Die Lösung dieser Aufgabe ergibt sich erfindungsgemäß durch die Merkmale des Anspruchs 1. Vorteilhafte Weiterbildungen der Erfindung sind in Unteransprüchen angegeben. Der Vorteil der erfindungsgemäßen Haltevorrichtung besteht darin, dass der Laufwerksträger von einer Seite mittels einer einzigen Schraube spielfrei und, bezogen auf die Einschubrichtung, exakt ausgerichtet befestigt werden kann.

Ein Ausführungsbeispiel der Erfindung wird im Folgenden anhand der Zeichnungen näher erläutert.

Dabei zeigen
- Figur 1: ein käfigartiges Chassis zur Aufnahme von Speicherlaufwerksträgern im perspektivischer Darstellung und
- Figur 2: die Befestigung des Speicherlaufwerkträgers in einer Anordnung nach Figur 1 in schematischer Schnittdarstellung.

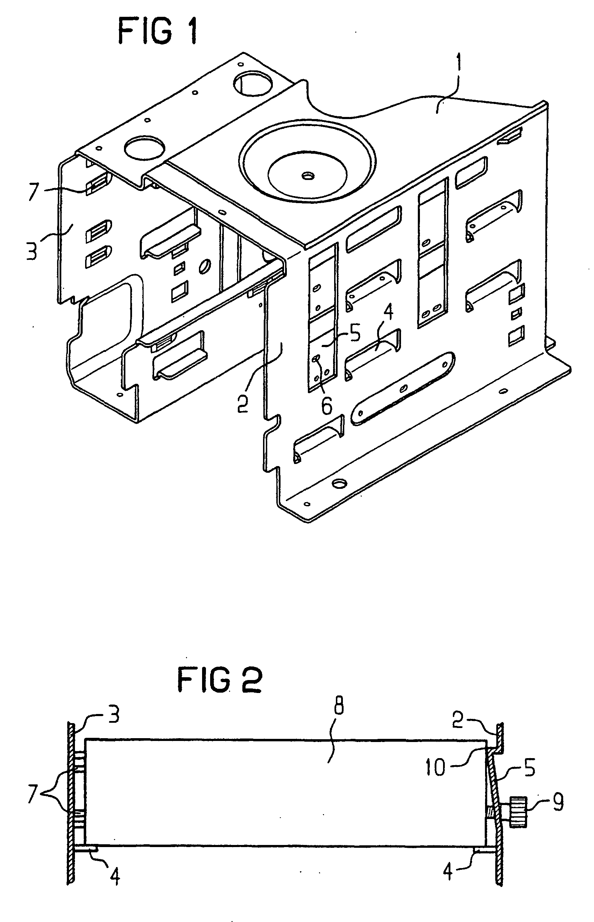

Die Figur 1 zeigt ein perspektivisch dargestelltes käfigartiges Chassis 1 zur Aufnahme wenigstens zweier übereinander angeordneter Speicherlaufwerksträger. An den einander gegenüberstehenden Seitenwänden 2, 3 des Chassis 1 sind mehrere streifenartige Führungslaschen 4 freigestanzt und rechtwinklig nach innen gebogen. Sie dienen als Auflage für die zwischen die beiden Seitenwände 2, 3 des Chassis einschiebbaren Speicherlaufwerksträger. Zur sicheren Auflage über die gesamte Länge der Speicherlaufwerksträger sind pro Einbauplatz auf jeder Seitenwand 2, 3 jeweils zwei Führungslaschen 4 vorgesehen. An einer der beiden Seitenwände, beispielsweise an der rechten Seitenwand 2, sind seitlich versetzt zu diesen Führungslaschen 4 jeweils nach innen gerichtete Wandvorsprünge 5 vorgesehen, die im gezeigten Ausführungsbeispiel als schräg nach innen geneigte, weitgehend ebene Flächen ausgebildet sind. Diese Wandvorsprünge 5 sind jeweils im Bereich der an den Seitenflächen der Laufwerksträger vorgesehenen Gewindebohrungen angeordnet. Die Wandvorsprünge 5 weisen deshalb jeweils eine Aussparung 6 für eine von aussen ansetzbare Schraube auf. Die Funktion dieser Wandvorsprünge 5 wird im Zusammenhang mit der Beschreibung der Figur 2 noch näher erläutert werden. An der Innenseite der anderen Seitenwand 3 sind ein oder mehrere Federelemente 7 vorgesehen, die vorzugsweise aus dem Blechmaterial der Seitenwand 3 in einem Stanz- und Prägevorgang gebildet sind. Ein in den jeweiligen Einbauplatz eingeschobener Laufwerksträger wird somit einerseits durch die Federelemente 7 und andererseits durch die Wandvorsprünge 5 spielfrei gehalten.

Die Funktion der Haltevorrichtung ergibt sich im Folgenden aus der schematischen Schnittdarstellung gemäß Figur 2. Diese Figur 2 zeigt jeweils einen Abschnitt der Seitenwände 2, 3 des in Figur 1 dargestellten Chassis 1 im Bereich eines Einbauplatzes für einen Speicherlaufwerksträger 8. Der zwischen die beiden Seitenwände 2, 3 einschiebbare Speicherlaufwerksträger 8 liegt dabei auf den an den Seitenwänden 2, 3 nach innen gebogenen Führungslaschen 4 auf. Die Befestigung erfolgt über eine einzige, im Bereich eines Wandvorsprungs 5 eingreifende Schraube 9, die in eine Gewindebohrung an der Seitenfläche des Laufwerksträgers 8 einschraubbar ist. Dabei wird der Laufwerksträger 8 angezogen und an der parallel zur Einschubrichtung verlaufenden Stützkante 10 des Wandvorsprungs 5 ausgerichtet. Die an der Seitenwand 3 vorgesehenen Federelemente 7 bewirken einerseits, dass der Laufwerksträger zwischen den Federelementen 7 und dem Wandvorsprung 5 spielfrei gehalten wird, und sie verhindern andererseits beim Festdrehen der Schraube 9 ein unerwünschtes Verdrehen des Laufwerkträgers 8 aus der Horizontallage. Der Wandvorsprung 5 wird in einem Prägevorgang aus dem Material der Seitenwand 2 geformt. Er kann, wie gezeigt, aus einer schräg nach innen geneigten, im wesentlichen ebenen Fläche bestehen, deren obere Begrenzung als Stützkante 10 dient. Der Wandvorsprung kann aber auch als wenigstens teilweise gewölbte Stützfläche ausgebildet sein.

## Patentansprüche

1. Haltevorrichtung für Computer-Speicherlaufwerke, bestehend aus einem rechteckigen, käfigartigen Chassis (1), das an gegenüberliegenden Seitenwänden (2, 3) nach innen gerichtete Führungselemente zur Aufnahme wenigstens eines horizontal einschiebbaren und mittels Schraubverbindung befestigbaren Laufwerkträgers (8) aufweist,
**dadurch gekennzeichnet,**
**dass** an einer der beiden Seitenwände (2,3) des Chassis (1) für jeden Einbauplatz wenigstens ein nach innen gerichteter Wandvorsprung (5) vorgesehen ist, der eine parallel zur Einschubrichtung verlaufende Stützkante (10) aufweist, dass der Wandvorsprung (5) im Bereich der Gewindebohrung der sich am Wandvorsprung (5) abstützenden Seitenfläche des Laufwerkträgers (8) eine Aussparung (6) für eine von aussen ansetzbare Schraube (9) aufweist und dass an der gegenüberliegenden Seitenwand (3) Federelemente (7) vorgesehen sind, so dass der mittels der Schraube (9) an den Wandvorsprung (5) gezogene Laufwerksträger (8) parallel zur Einschubrichtung spielfrei und verdrehungssicher befestigt ist.

2. Haltevorrichtung nach Anspruch 1,
**dadurch gekennzeichnet,**
**dass** der Wandvorsprung (5) als schräg nach innen geneigte weitgehend ebene Fläche ausgebildet ist, deren obere Begrenzung als Stützkante (10) dient.

3. Haltevorrichtung nach Anspruch 2,
**dadurch gekennzeichnet,**
**dass** der Wandvorsprung als rechteckige Fläche ausgebildet ist.

4. Haltevorrichtung nach einem der vorhergehenden Ansprüche,
**dadurch gekennzeichnet,**
**dass** der Wandvorsprung durch einen Prägevorgang gebildet ist.

## Claims

1. Retaining device for floppy-disk drives for computers, comprising a rectangular, cage-like chassis (1) which, on mutually opposite side walls (2, 3), has inwardly directed guide elements for accommodating at least one drive support (8) which can be pushed in horizontally and fastened by means of a screw-connection, **characterized in that** provided on one of the two side walls (2, 3) of the chassis (1), for each mounting location, is at least one inwardly directed wall protrusion (5) which has a supporting edge (10) running parallel to the push-in direction, **in that**, in the region of the threaded bore of that side surface of the drive support (8) which is supported on the wall protrusion (5), the wall protrusion (5) has a cutout (6) for a screw (9) which can be fitted from the outside, and **in that** resilient elements (7) are provided on the opposite side wall (3), with the result that the drive support (8), which is drawn onto the wall protrusion (5) by means of the screw (9), is fastened parallel to the push-in direction in a play-free and rotationally secured manner.

2. Retaining device according to Claim 1, **characterized in that** the wall protrusion (5) is designed as an obliquely inwardly inclined, largely planar surface, of which the top boundary serves as a supporting edge (10).

3. Retaining device according to Claim 2, **characterized in that** the wall protrusion is designed as a rectangular surface.

4. Retaining device according to one of the preceding claims, **characterized in that** the wall protrusion is formed by a stamping operation.

## Revendications

1. Dispositif de maintien pour des lecteurs de disques d'ordinateurs, constitué d'un châssis (1) rectangulaire du genre cage, qui comporte sur des parois (2, 3) latérales opposées des éléments de guidage dirigés vers l'intérieur pour recevoir au moins un support (8) de lecteur qui peut être inséré horizontalement et fixé par des vis,
**caractérisé en ce que**, sur une des deux parois (2, 3) latérales du châssis (1), il est prévu pour chaque emplacement au moins une saillie (5) de paroi dirigée vers l'intérieur, qui possède un bord (10) de soutien s'étendant parallèlement à la direction d'insertion, **en ce que** la saillie (5) de paroi comporte, dans la région du taraudage de la face latérale du support (8) de lecteur qui s'appuie contre la saillie (5) de paroi, un évidement (6) pour une vis (9) pouvant être mise en place de l'extérieur, et **en ce que**, sur la paroi (3) latérale opposée, il est prévu des éléments (7) élastiques, de sorte que le support (8) de lecteur, serré contre la saillie (5) de paroi au moyen de la vis (9), est fixé sans jeu parallèlement à la direction d'insertion et bloqué en rotation.

2. Dispositif de maintien suivant la revendication 1, **caractérisé en ce que** la saillie (5) de paroi est réalisée sous forme de surface essentiellement plane, inclinée en oblique vers l'intérieur, dont la délimitation supérieure sert de bord (10) de soutien.

3. Dispositif de maintien suivant la revendication 2, **caractérisé en ce que** la saillie de paroi est réalisée sous forme de surface rectangulaire.

4. Dispositif de maintien suivant l'une des revendications précédentes, **caractérisé en ce que** la saillie de paroi est formée par un processus de repoussage.
